# EUROPEAN PATENT APPLICATION

(11) **EP 2 781 420 A2**
(43) Date of publication of application: **24.09.2014**
(21) Application number: 12849320.2
(22) Date of filing: 27.07.2012
(51) Int. Cl.: B60T 13/02, B60T 1/08, B61H 7/00, B64C 25/32

(54) **QUICK BRAKING ASSEMBLY**

(30) Priority: 19.11.2011 CN 201110387705
(71) Applicant: Li, Zhonghua, Ganzhou, Jiangxi 341600 (CN); Huang, Yuhua, Ganzhou, Jiangxi 341600 (CN)
(72) Inventor: Li, Zhonghua, Ganzhou, Jiangxi 341600 (CN); Huang, Yuhua, Ganzhou, Jiangxi 341600 (CN)
(74) Representative: Michalski Hüttermann & Partner Patentanwälte mbB
(86) International application number: PCT/CN2012/001011
(87) International publication number: WO 2013/071686

(57) **Abstract**

The present invention relates to a quick brake assembly for a high-speed train, a high-speed car, aircraft, and a high-speed motorcycle. The quick brake assembly includes at least one lifting device providing on a bottom portion of a corresponding vehicle, at least one air braking device mounting on a predetermined position of the corresponding vehicle, and at least one nozzle braking device mounting on a bottom portion of the corresponding vehicle. The lifting device includes a braking member having a zigzag cross section. The nozzle baking device includes a nozzle having a flat nozzle head, wherein the nozzle braking device is arranged to store a predetermined amount of braking agent.

## Description

### Background of the Present Invention

### Field of Invention

The present invention relates to a braking assembly, and more particularly to a braking assembly for use in high-speed train braking, high-speed motor vehicle braking, aircraft landing braking, high-speed underground train braking, and high-speed motorcycle braking.

### Description of Related Arts

Conventional high-speed trains, high-speed underground trains, high-speed motor vehicles, racing cars, sports cars, high-speed aircrafts and high-speed motorcycles all have a common problem of inadequate braking ability. There have been many fatal accidents that the cause of which relate to the inadequate braking ability of high-speed vehicles when the vehicles suddenly encounter barrier in front of them. Example incident (1): on July 23, 2011 at 20:02, train D3115 operating in Zhejiang Province of China was hit by a lighting storm and stopped on a railway track. At 20:30, the captain of another train D301 noticed that train D3115 stopped on the railway track in front of his train and he applied brake to try to bring his train into a complete stop. However, due to high inertia of train D301, the captain was unable to stop the train in time and hit on train D3115. The incident was a cataclysm and caused 39 deaths and 192 injuries. The relevant trains were severely damaged and caused substantial loss of money. This incidents reveals that the high-speed rail system in China suffers from many fatal disadvantages and requires as many as 11 areas of substantial improvements (at the time when China introduced high-speed rail, the relevant Chinese authority paid a sum of approximately seven billions RMB consulting fee, and spent another ten billion RMB to purchase nine core technologies relating to high-speed rail, one of them was braking technology). At the time the incident occurred, one of the core technological areas (i.e. the braking technology) was unable to allow the relevant train to stop in time so as to avoid the accident just described. Example incident (2): On April 28, 2008, a train operating in Shandong Province of China derailed from the track because of speeding. The captain of another train discovered this incident, and applied the brake at an attempt to stop the train. However, due to high inertia of train, the captain was unable to stop the train in time and hit on derailed train. The incident was also a cataclysm and caused 70 deaths and 200 injuries, including 5 foreigners. Both trains were severely damaged. Example incident (3): On October 27, 2000, train K860 was unable to stop in time and derailed. Example incident (4): On May 07, 1998, train 3018 was unable to stop in time and hit another train. Example incident (5): On September 27, 2011, an underground train operating in Shanghai underground system hit another underground after failing to stop in time. The incident caused 200 injuries. The Rail authority in China required emergency braking distances A for various ranges of train speeds V. A=800m for V<120km/hr., A=1400m for 120km/hr. < V ≤ 160km/hr., A=2000m for 160km/hr. < V ≤ 200km/hr., A=2700m for 200km/hr. < V ≤ 250km/hr., A=3700km for 250km/hr. < V ≤ 300km/hr., and A=4800km for 300km/hr. < V ≤ 350km/hr. Throughout world history, there have been many catastrophic events involving train accidents due to inadequate braking ability of the trains. In order to resolve this deep-seated and worldwide problem, the Chinese Academy of Railway Science, the CNR Corporation Limited of China, the CSR Corporation Limited of China, CSR Ziyang Locomotive Co. Ltd. of China allhave employed many academics, scientists and engineers to research on this topic. Furthermore, many renowned universities, such as Southwest Jiaotong University, Beijing Jiaotong University, East China Jiaotong University, and Shanghai Railway Institutehave devolved many resources to perform research on this topic but have failed to develop any effective method or system for effectively braking high-speed trains and high-speed underground trains. As a result, there still exist many fatal accidents involving high-speed trains, racing cars, sports cars, buses and high-speed motorcycles. These accidents have been caused by inadequate braking ability on the part of the relevant vehicles. Moreover, there were approximately 300 deaths due to car accidents during national day holidays in 2011. In addition, a Chinese tour in Thailand encountered brake failure when the bus was travelling downhill. The accident caused 20 deaths and several injuries. The remedy furnished by the Thai government is merely equivalent to approximately RMB two hundred thousand. On September 2011, nine racing cars moving at 300km/hr. in a F1 racing track were involved in an accident which caused death and injuries to some of the world top racing drivers. The accident also caused severe damage to the racing cars involved. These losses are due to inadequate braking ability, impact resistance on the part of the racing cars. As a matter of fact, there exist more and more automobiles throughout the world. However, the increased number of automobiles all share a common disadvantage of inadequate braking ability and impact resistance (because of extended braking distance and ineffective braking mechanism). This problem has caused increased number of traffic accidents. In order to resolve this worldwide problem, a huge amount of resource has been devoted. For example, MERCEDES of Germany spent Euro 2.4 billion in 2009 to perform research on this topic. The total amount of research funding used worldwide exceeds hundred billions. Many internationally famous automakers such as MERCEDES, BMW, VOLKSWAGAN, PORSCHE, and AUDI of Germany, GMC, FORD, and CADILLAC of United States of America, CITROEN and PEUGEOT of France, FERRARI of Italy, TOYOTA, HONDA, MITSUBISHI of Japan, and ROLLS ROYCE of United Kingdom have all devoted a great deal of resources to improve braking ability and impact resistance of their cars. These efforts have all failed. The huge amount of resources has allowed car manufacturers to develop a wide range of safety accessories such as seat belts, air bags, ejection seats etc. While these safety accessories may be able to protect the drivers, they have limited use in terms of minimizing car damage and protecting passengers. Shortening the braking distance is the most effective and the most economical way to improve vehicles' safety. The same problem arises in passengers' aircraft and military aircrafts. Inadequate landing capability has caused many accidents on various kinds of aircraft. Aircraft manufacturers and research institutes have employed many top scientists, engineers, technicians and have acquired a huge amount of research funding, yet they have failed to provide an effective solution to resolve the problem of inadequate landing capability or ability of passengers or military aircrafts. Almost all conventional braking devices focus on the rotating portion of the relevant vehicles (i.e. the wheels) and utilize friction between the wheel surfaces and the corresponding contact surfaces (i.e. ground surfaces, tracks, etc.) to reduce the speed of the corresponding vehicles. This braking mechanism has the disadvantages of small contact surface area, inadequate braking friction and ineffective braking performance.

### Summary of the Present Invention

The present invention provides a quick braking assembly which is capable of providing effective braking for high-speed trains, high-speed underground trains, and other vehicles. In order to resolve the problem of inadequate braking ability for high-speed trains, high-speed underground trains, and other vehicles, my invention provides additional braking for the relevant vehicles by using the vehicles' existing electrical power, and air braking system. The explicit embodiments of the present invention are: providing a device for removing raindrops or ice from a locomotive of a train or underground train so as to ensure the braking ability thereof when the train is travelling in adverse weather. (1) the present invention provides a road braking device which comprises a plurality (typically 4 to 6) lifting devices providing on a bottom portion of each of a railroad car of a train, wherein each of the lifting devices comprises a braking device (a braking clamp) providing on a bottom portion of the corresponding lifting device, and a braking member (the braking member may be configured by a material having a high coefficient of friction which is extremely suitable for use on a railway track, such as scouring rubber, brake shoe or any other material developed by research and development). When the braking devices are mounted on the bottom portion of the railcar, one skilled in the art must also consider the curvature of the railway track so as to ensure proper engagement between the braking devices and the railway track. This also ensures proper horizontal clamping pressure (for ensuring that the braking clamp properly clamps the railway track) and proper vertical clamping pressure (for ensuring that the braking clamp is kept to contact the railway track) may be exerted by the braking device for maximum safety and stability. A central control switch for all the braking devices are provided in the train operator's workplace. When emergency exists, the train operator may activate the train's existing brake system and the braking devices of the present invention through the central control switch, so as to allow each of the braking devices (braking clamps) to securely clamp on the relevant position of the railway track, and to allow the braking member to physically contact the railway track so as to develop a huge frictional force (braking force) between the railway track and the corresponding braking member for rapidly bringing the train to completely stop so as to prevent occurrence of accident. (2) the present invention further provides a plurality of air braking devices mounting on a predetermined position of each of the railway cars. The air braking devices are provided on the last railway car of the train and on two sides of each of the railway cars. Each of the air braking devices is retractably and spacedly provided on the corresponding position of the corresponding railway car. Each of the air braking devices comprises an air resistance panel which is preferably red in color. Each of the air resistance panel is imprinted a predetermined characters, such as "STOP" for providing warning to any other incoming trains. The exact positioning and dimension of the air resistance panel must be determined by reference to the safety distance from two sides of the train. Therefore, the air braking devices (the air resistance panels) are provided on the last railway car of the train and at two sides of each of the railway cars. Moreover, the air braking devices are controlled by a main controller provided in the train operator's workplace. When emergency exists, the train operator may activate the train's existing brake system and the air braking devices of the present invention through the main controller, so as to allow each of the air resistance panels (red in color) to extend from the last railway car and from two sides of each of the railway car so as to develop huge air resistance for rapidly bringing the train to completely stop so as to prevent occurrence of accident. (3) the present invention further provides a plurality of nozzles braking devices mounting on a bottom portion of each of the railway cars (preferably at a position in the vicinity of each wheel assembly of the railway car). Each of the nozzle baking devices comprises a nozzle having a flat nozzle head, wherein each of the nozzle braking devices is arranged to store a predetermined amount of braking agent. Preferably, there exist four nozzle braking devices provided around each wheel assembly. Two of the nozzle braking devices are arranged to eject the braking agent in frontal direction with respect to the wheel assembly, while another two of the nozzle braking devices are arranged to eject braking agent at rear direction with respect to the wheel assembly. The braking agent may be configured from a material which has very good and rapid adhesive performance (rapid adhesion) so as to increase the friction between the wheel assembly and the railway track. Examples of the braking agent may be A.B. adhesives, polyurethane, resin, epoxy, asphalt and other strong adhesives or materials developed by research and development in this area. The nozzle braking devices are centrally controlled by a main nozzle switch provided in the train operator's workplace. When emergency exists, the train operator may activate the train's existing brake system and the nozzle braking devices of the present invention through the main nozzle switch, so as to allow each of the nozzles to eject a predetermined amount of braking agent (rapid adhesives) to the railway track so as to increase the friction between the wheel assembly and the railway track for rapidly bringing the train to completely stop so as to prevent occurrence of accident.

The present invention also provides a quick braking assembly which is capable of providing effective braking for high-speed cars, buses, racing cars, sport cars, and other similar vehicles. In order to resolve the problem of inadequate braking ability for high-speed cars, buses, racing cars, sport cars, and other similar vehicles, my invention provides additional braking for the relevant vehicles based on the vehicles' existing braking system. The explicit embodiments of the present invention are: (1) the present invention provides a road braking device comprising a plurality of lifting devices providing on a bottom portion of the corresponding high-speed car, bus, racing car, sport car, or other similar vehicle, wherein each of the lifting devices comprises a braking member (the braking member may be configured by a material having a high coefficient of friction such as scouring rubber). Each of the braking members has a contact surface having a zigzag cross section for further increasing the friction between the braking member and a road surface when the braking members is in contact with the road surface. A central control switch for all the lifting devices is provided on the vehicle's dashboard. Each of the lifting devices is arranged to drive the braking member to optimally bias against the road surface. When emergency exists, the vehicle's driver may activate the vehicle's existing brake system by stepping on a brake's pedal and the braking devices of the present invention through the central control switch, so as to allow each of the lifting devices to drive the corresponding contact surface of the braking member to come into contact with the road surface so as to develop a huge frictional force (braking force) between the contact surface and the road surface for rapidly bringing the vehicle to completely stop so as to prevent occurrence of accident. (2) the present invention further provides a plurality of air braking devices retractably mounting on a predetermined position on a high-speed car, a bus, a racing car, a sport car, or on a similar vehicle. The air braking devices are provided on a rear portion and on two sides of the vehicle respectively. Each of the air braking devices comprises an air resistance panel which is preferably red in color. Each of the air resistance panel is imprinted predetermined fluorescent characters, such as "STOP" for providing warning to any other incoming vehicles. The air braking devices are controlled by a main controller provided on the dashboard. When emergency exists, the driver may activate the vehicle's existing brake system and the air braking devices of the present invention through the main controller, so as to allow each of the air resistance panels (red in color) to extend from the vehicle so as to develop huge air resistance for rapidly bringing the vehicle to completely stop so as to prevent occurrence of accident. The characters imprinted on the air resistance panels are imprinted by fluorescent material and provide warning to incoming traffic even when the emergency occurs in a dark environment. Thus, the air braking devices may also prevent multiple vehicle collision. (3) the present invention further provides a plurality of nozzles braking devices mounting on a bottom portion of the corresponding vehicle, such as a high-speed car, a bus, a racing car, a sport car, or other similar vehicle. Each of the nozzle baking devices comprises a nozzle having a flat nozzle head, wherein each of the nozzle braking devices is arranged to store a predetermined amount of braking agent. The braking agent may be configured from a material which has very good and rapid adhesive performance (rapid adhesion) so as to increase the friction between the wheels of the vehicle and the road surface. Examples of the braking agent may be A.B. adhesives, polyurethane, resin, epoxy, asphalt and other strong adhesives or materials developed by research and development in this area. The nozzle braking devices are centrally controlled by a main nozzle switch provided on the vehicle's dashboard. When emergency exists, the driver may activate the vehicle's existing brake system and the nozzle braking devices of the present invention through the main nozzle switch, so as to allow each of the nozzles to eject a predetermined amount of braking agent (rapid adhesives) to the road surface so as to increase the friction between the wheels of the vehicle and the road surface for rapidly bringing the vehicle to completely stop so as to prevent occurrence of accident.

The present invention also provides a quick braking assembly which is capable of providing effective braking for passenger airplanes, military aircrafts, and other similar aircrafts. In order to resolve the problem of inadequate braking ability of passenger aircrafts or military aircrafts and the requirement of extended runway for conventional aircrafts, the explicit embodiment of the present invention is: the present invention provides a road braking device comprising at least one lifting device providing on a bottom portion of the corresponding aircraft, wherein the lifting device comprises a braking member (the braking member may be configured by a material having a high coefficient of friction with respect to a predetermined runway for the aircraft). The braking member has a contact surface having a zigzag cross section for further increasing the friction between the braking member and the runway when the braking member is in contact with the runway. The lifting device and the braking member must be compatible with the stability and safety of the aircraft when landing. A central control switch for the lifting device is provided on the aircraft control cockpit. When emergency landing is required, the pilot may activate the braking device of the present invention through the central control switch, so as to allow the lifting device to drive the corresponding contact surface of the braking member to come into contact with the runway so as to develop a huge frictional force between the contact surface and the runway for rapidly bringing the aircraft to completely stop so as to prevent occurrence of accident and allows safe and stable landing.

The present invention also provides a quick braking assembly which is capable of providing effective braking for high-speed motorcycles. In order to resolve the problem of inadequate braking ability of high-speed motorcycle, the explicit embodiment of the present invention is: the present invention provides at least one air braking device retractably mounting on a predetermined position on the high-speed motorcycle. The air braking device comprises an air resistance panel which is preferably red in color. When emergency exists, the driver may activate the vehicle's existing brake system and the air braking device of the present invention so as to allow the air resistance panel (red in color) to extend from the high-speed motorcycle so as to develop huge air resistance for rapidly bringing the vehicle to completely stop so as to prevent occurrence of accident. The air resistance panel, being red in color, may provide warning to incoming traffic and prevent multiple vehicle collision.

From the above description: 1. Each of our high-speed trains is equipped with a device for removing raindrops or ice from a locomotive of the high-speed train. Moreover, each of our high-speed trains comprises road braking device comprising a plurality of lifting devices (braking clamps) providing on a bottom portion of each of a railroad car of the high-speed train, a plurality of air braking devices provided on the last railway car of the high-speed train and on two sides of each of the railway cars, and a plurality of nozzles braking devices mounting on a bottom portion of each of the railway cars for ejecting braking agent (rapid adhesives) on the railway track. When emergency exists, the train's driver may, depending on the circumstances, select one or more of these devices for rapidly braking the high-speed trains. 2. Each of our high-speed cars comprises a road braking device comprising a plurality of lifting devices (braking member having a zigzag contact surface) providing on a bottom portion of the high-speed car, a plurality of air braking devices provided on a rear portion and two sides of the high-speed car, and a plurality of nozzles braking devices mounting on a bottom portion of the high-speed car for ejecting braking agent (rapid adhesives) on a road surface. When emergency exists, the driver of the high-speed car may, depending on the circumstances, select one or more of these devices for rapidly braking the high-speed cars. 3. Each of our passenger airplanes or military aircrafts comprises at least one lifting device providing on a bottom portion of the corresponding aircraft, wherein the lifting device comprises a braking member (the braking member may be configured by a material having a high coefficient of friction with respect to a predetermined runway for the aircraft). The braking member has a contact surface having a zigzag cross section for further increasing the friction between the braking member and the runway when the braking member is in contact with the runway. When emergency landing is required, the pilot may activate the braking device of the present invention for rapidly bringing the aircraft to completely stop. 4. Each of our high-speed motorcycles comprises at least one air braking device retractably mounting on a predetermined position thereon. Our high-speed trains, high-speed cars, high-speed underground trains, and aircrafts may, depending on circumstances, be equipped with the lifting devices, air braking device (red air resistance panel), and nozzle braking devices (rapid adhesives). The quick braking assembly of the present invention brings new technological breakthrough to those skilled in the art and generally to this field of technology. The present invention has become the first to develop a zigzag contact surface of the braking member. The present invention also provides air braking devices on trains, cars and motorcycles, and rapid adhesives as braking agents for braking the relevant vehicles. Therefore, out high-speed trains, high-speed cars, aircrafts, high-speed underground trains, and motorcycles can be equipped with the road braking device, the air braking devices and the nozzle braking devices with rapid adhesives so as to substantially increase their braking ability and performance for avoiding occurrence of fatal accidents. The aim is to reduce 60% of traffic accidents. As a result, the quick braking assembly of the present invention has overcome the conventional problems of inadequate braking ability. The present invention allows multiple braking strategies to achieve highly professional, effective, and diversified braking performance. Thus, the present invention can substantially reduce the number of traffic accidents, the number of deaths and injuries, and economical loss so as to increase the overall stability of society as a whole.

### Brief Description of the Drawings

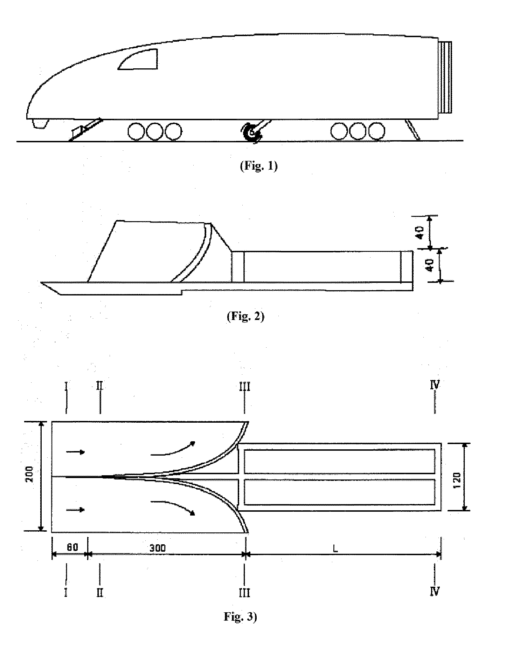

Fig. 1 is a schematic diagram of a device for removing raindrops or ice from a locomotive of a high-speed train according to a preferred embodiment of the present invention.
Fig. 2 is a side view of the device for removing raindrops or ice from the locomotive of the high-speed train according to the preferred embodiment of the present invention.
Fig. 3 is a plan view of the device for removing raindrops or ice from the locomotive of the high-speed train according to the preferred embodiment of the present invention.

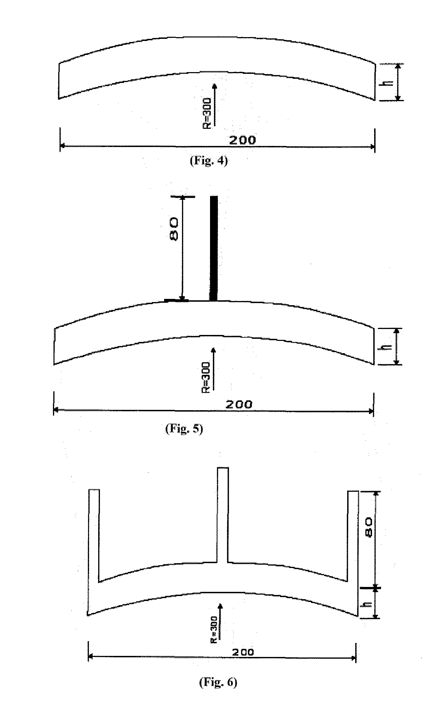

Fig. 4 is a sectional side view of the device for removing raindrops or ice from the locomotive of the high-speed train along plane I-I according to the preferred embodiment of the present invention.
Fig. 5 is a sectional side view of the device for removing raindrops or ice from the locomotive of the high-speed train along plane II-II according to the preferred embodiment of the present invention.
Fig. 6 is a sectional side view of the device for removing raindrops or ice from the locomotive of the high-speed train along plane III-III according to the preferred embodiment of the present invention.

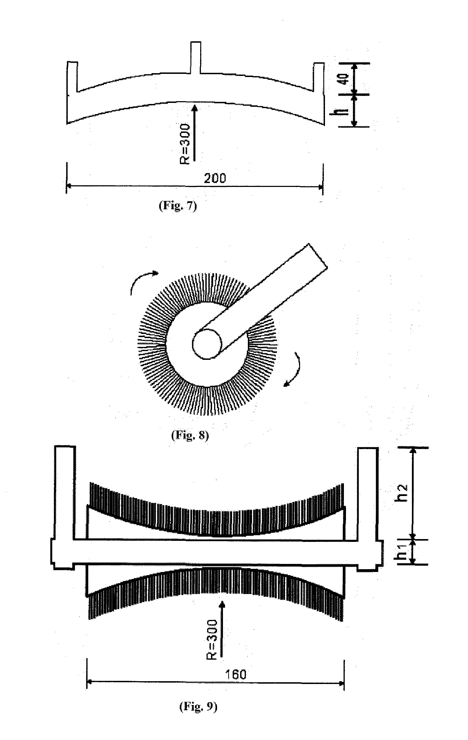

Fig. 7 is a sectional side view of the device for removing raindrops or ice from the locomotive of the high-speed train along plane IV-IV according to the preferred embodiment of the present invention.
Fig. 8 is another schematic diagram of the device for removing raindrops or ice from the locomotive of the high-speed train according to the preferred embodiment of the present invention.
Fig. 9 is a front view of the device for removing raindrops or ice from the locomotive of the high-speed train according to the preferred embodiment of the present invention.

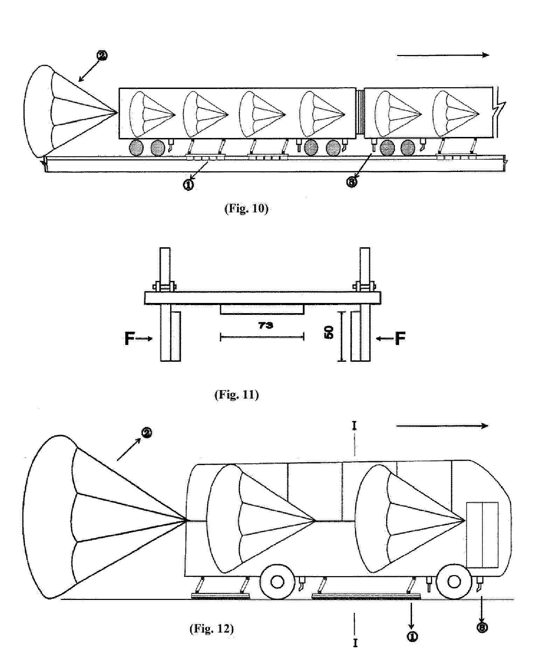

Fig. 10 is a schematic diagram of a high-speed train (underground train) equipped with a road braking device, an air braking device and a nozzle braking device according to the preferred embodiment of the present invention.
Fig. 11 is a schematic diagram of the road braking device (braking clamp) according to the preferred embodiment of the present invention, wherein the dimensions are indicated in millimeters.
Fig. 12 is a schematic diagram of a high-speed bus equipped with the road braking device, the air braking device and the nozzle braking device according to the preferred embodiment of the present invention.

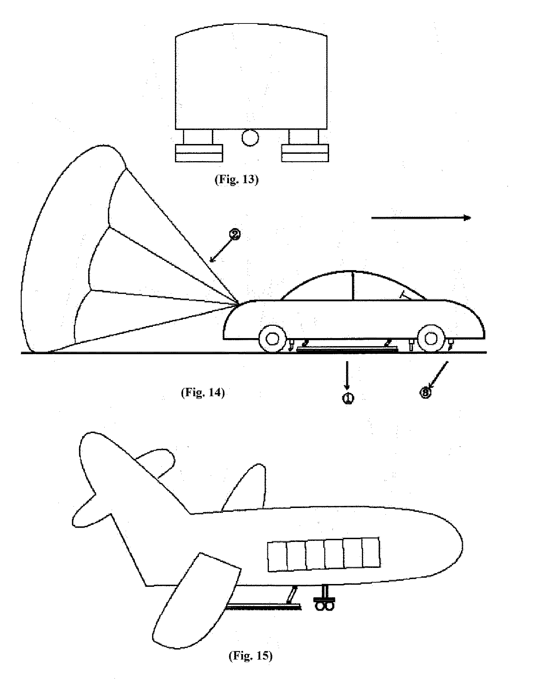

Fig. 13 is a sectional side view of the high-speed bus along plane I-I according to the preferred embodiment of the present invention.
Fig. 14 is a schematic diagram of a high-speed sport car equipped with the road braking device, the air braking device and the nozzle braking device according to the preferred embodiment of the present invention.
Fig. 15 is a schematic diagram of a passenger aircraft equipped with the road braking device according to the preferred embodiment of the present invention.

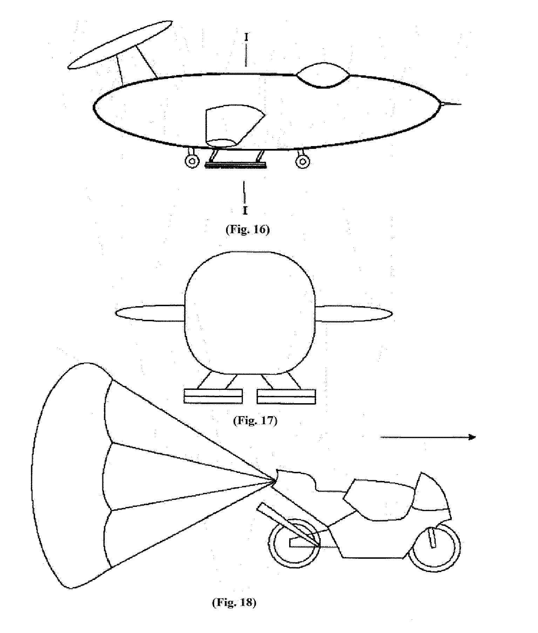

Fig. 16 is a schematic diagram of a military aircraft according to the preferred embodiment of the present invention.
Fig. 17 is a sectional side view of the military aircraft along plane I-I according to the preferred embodiment of the present invention.
Fig. 18 is a schematic diagram of a high-speed motorcycle equipped with the air braking device according to the preferred embodiment of the present invention, wherein the dimensions shown in the above drawings are indicated in millimeters.

### Detailed Description of the Preferred Embodiment

The present invention should be jointly developed through research institutes, trains manufacturers, aircraft manufacturers, automobiles manufacturers, motorcycles manufacturers worldwide so as to allow widespread productions and applications of the present invention.

## Claims

1. A high-speed train comprising a device for removing raindrops or ice from said high-speed train, a road braking device which comprises a plurality of lifting devices providing on a bottom portion of each of a railroad car of said high-speed train, wherein each of said lifting devices comprises a braking device (a braking clamp) providing on a bottom portion of said corresponding lifting device, and a braking member, wherein high-speed train further comprises a plurality of air braking devices mounting on a predetermined position of each of said railway cars, wherein said air braking devices are provided on said last railway car of said train and on two sides of each of said railway cars, said high-speed train further comprising a plurality of nozzles braking devices mounting on a bottom portion of each of said railway cars, wherein each of said nozzle baking devices comprises a nozzle having a flat nozzle head, wherein each of said nozzle braking devices is arranged to store a predetermined amount of braking agent. As a result, one may need permission from the inventor of the present invention to install a device for removing raindrops or ice from said high-speed train, a plurality of lifting devices, a plurality of air braking devices, and a plurality of nozzles braking devices on a high-speed train. Otherwise, such actions may be deemed as infringement.

2. A high-speed car, a racing car, a bus, or a sport car comprising a plurality of lifting devices providing on a bottom portion of said high-speed car, said racing car, said bus, or said sport car, wherein each of said lifting devices comprises a braking member having a zigzag contact surface, said high-speed car, said racing car, said bus, or said sport car further comprising a plurality of air braking devices mounting on a rear portion and two sides of said corresponding said high-speed car, said racing car, said bus, or said sport car respectively, said high-speed car, said racing car, said bus, or said sport car further comprising a plurality of nozzles braking devices mounting on a bottom portion of said corresponding said high-speed car, said racing car, said bus, or said sport car further comprising, wherein each of said nozzle baking devices comprises a nozzle having a flat nozzle head, wherein each of said nozzle braking devices is arranged to store a predetermined amount of braking agent. As a result, one may need permission from the inventor of the present invention to install a plurality of lifting devices, a plurality of air braking devices, and a plurality nozzle braking devices on said high-speed car, said racing car, said bus, or said sport car. Otherwise, such actions may be deemed as infringement.

3. A high-speed aircraft comprising a plurality of lifting devices providing on a bottom portion of said aircraft, wherein said lifting device comprises a braking member having a zigzag contact surface. As a result, one may need permission from the inventor of the present invention to install a plurality of lifting devices on said aircraft. Otherwise, such action may be deemed as infringement.

4. A high-speed motorcycle comprising an air braking device providing on a rear portion of said high-speed motorcycle. As a result, one may need permission from the inventor of the present invention to install an air braking device on said high-speed motorcycle. Otherwise, such action may be deemed as infringement.
